# EUROPÄISCHE PATENTSCHRIFT

(11) **EP 1 634 750 B1**
(45) Veröffentlichungstag und Bekanntmachung des Hinweises auf die Patenterteilung: **04.09.2013**
(21) Anmeldenummer: 05019637.7
(22) Anmeldetag: 09.09.2005
(51) Int. Cl.: B60J 7/12

(54) **Cabriolet-Fahrzeug**
Convertible car
Véhicule convertible

(30) Priorität: 09.09.2004 DE 102004044029
(43) Veröffentlichungstag der Anmeldung: 15.03.2006
(73) Patentinhaber: Valmet Automotive Oy, 23500 Uusikaupunki (FI)
(72) Erfinder: Russke, Klaus, 49143 Bissendorf (DE); Weissmüller, Olaf, 49565 Bramsche (DE); Bunsmann, Winfried, 49143 Bissendorf (DE)
(74) Vertreter: Kronthaler, Schmidt & Coll.

(56) Entgegenhaltungen:
- EP-A1- 1 184 218
- DE-A1- 10 029 471
- DE-A1- 19 936 099
- DE-U1- 29 901 589

## Beschreibung

Die Erfindung bezieht sich auf ein Cabriolet-Fahrzeug mit einem in seiner Schließstellung einen Fahrgastraum überspannenden und aus der Schließstellung in eine in einem rückwärtigen Fahrzeugbereich gelegene Ablagestellung überführbaren, eine starre Heckscheibe aufweisenden Dach, das an einem Eck- und Querspriegel sowie an einem zumindest ein Antriebselement zur Bewegung des Daches aus seiner Schließstellung in die Ablagestellung und zurück umfassenden Verdeckgestell festlegbar ist und wobei das Dach am rückwärtigen Ende an einem Haltebügel festlegbar ist.

Ein Cabriolet-Fahrzeug der vorgenannten Art ist beispielsweise aus der DE 199 36 099 A1 bekannt. Bei diesem Cabriolet-Fahrzeug ist das Dach als ein manuell betätigtes Klappverdeck ausgebildet, insbesondere auch für Cabriolet-Fahrzeuge mit einem Mittelmotor, bei dem über den Haltebügel das Verdeck in Schließrichtung, also in Richtung des Frontbereichs des Fahrzeuges hochgeklappt werden kann, um beispielsweise einen Verdeck- oder Motordeckel zu Wartungszwecken öffnen zu können. Um den Haltebügel in der hochgeklappten Wartungsstellung nicht von Hand halten zu müssen, ist ein besonderer Verriegelungsmechanismus mit Spannstangen vorgesehen, um den Haltebügel in der angehobenen Wartungsstellung lösbar festlegen zu können. Aufgrund der Eck- und Querspriegel ist das Dach jedoch nur mit einer Heckscheibe aus z.B. einem flexiblen Kunststoffmaterial vorzusehen, da ansonsten bei Ausbildung der Heckscheibe als starre Heckscheibe der Haltebügel nicht in die angehobene Wartungsstellung hochgeklappt werden kann.

Aus der Praxis, siehe z.B. das Dokument EP 1184218 A1, sind weiterhin Cabriolet-Fahrzeuge mit einem bei einer Verdecköffnungs- bzw. Verdeckschließbewegung in einer unteren Lage verbleibenden Haltebügel bekannt.

Es ist Aufgabe der vorliegenden Erfindung, ein Cabriolet-Fahrzeug der eingangs genannten Art derart weiterzubilden, dass eine hinreichend große Montage- bzw. Wartungsöffnung beispielsweise für Arbeiten an einem Mittelmotor oder an Verdeckgestängeteilen ermöglicht wird.

Zur Lösung dieser Aufgabe zeichnet sich das Cabriolet-Fahrzeug der eingangs genannten Art dadurch aus, dass die Heckscheibe über Heckscheibengestängeteile und Eckspriegel über Eckspriegelgestängeteile mit dem Antriebselement verbindbar sind, wobei sowohl die Heckscheibe mit den Heckscheibegestängeteilen als auch der Eckspriegel über die Eckspriegelgestängeteile relativ zu dem in einer Ruhestellung befindlichen Antriebselement verschwenkbar und mit dem Haltebügel in eine hochgeschwenkte Montage- oder Wartungsstellung überführbar sind.

Bei dem erfindungsgemäßen Cabriolet-Fahrzeug ist zunächst die Heckscheibe über Heckscheibengestängeteile mit dem Antriebselement verbunden, so dass diese Heckscheibe nicht nur innerhalb der Dachhaut festgelegt ist, sondern auch gesteuerte Öffnungsbewegungen des Daches mitmachen kann und auch in der Schließstellung des Daches über die Heckscheibengestängeteile sicher gehaltert ist. Dies ist insbesondere für Fahrzeuge mit einem relativ hohen Geschwindigkeitspotential erstrebenswert. Um aber auch bei einem solchen Cabriolet-Fahrzeug mit einer starren Heckscheibe, die zudem noch über besondere Heckscheibengestängeteile gehaltert und geführt ist, über den Haltebügel die Montage- und Wartungsstellung einnehmen zu können, sind die Heckscheibengestängeteile und im übrigen auch die Eckspriegelgestängeteile auf besondere Art und Weise mit dem Antriebselement verbunden, so dass Haltebügel, Heckscheibe mitsamt den Heckscheibengestängeteilen und Eckspriegel mitsamt den Eckspriegelgestängeteilen auch bei ansonsten geschlossenem Dach und nicht bewegtem Antriebselement in die Montage- und Wartungsstellung hochgeklappt werden können. Dazu sind die Eckspriegelgestängeteile und die Heckscheibengestängeteile relativ zu dem Antriebselement verschwenkbar, so dass sie in Schließstellung des Daches während der Öffnungsbewegung des Haltebügels in eine relativ verschwenkte Lage überführt werden können, um eine hinreichend große Montage- bzw. Wartungsöffnung für z.B. Arbeiten an einem Mittelmotor oder aber auch Arbeiten an Verdeckgestellteilen zu ermöglichen.

Bevorzugtermaßen ist das Antriebselement als zentrale Antriebswelle ausgebildet, an der ein zentraler manueller oder motorischer Antrieb zum Aufschwenken und Schließen des Daches angreifen kann, wobei eine das Fahrzeug quer durchsetzende Torsionswelle seitliche Verdeckgestellteile wie Lenker und dergleichen bewegungsfest miteinander verbindet. Damit ist ein sicheres und verkantungsfreies Öffnen des Daches gewährleistet. Zu dieser Antriebs- bzw. Torsionswelle sind in deren Ruhestellung, also wenn sich diese nicht dreht bzw. verschwenkt, die Heckscheibengestängeteile und die Eckspriegelgestängeteile relativ zu verschwenken. Da der Haltebügel des Daches und das Verdeckgestell in separaten Lagerstellen gelagert sind, kann der Haltebügel relativ zu den Verdeckgestellteilen verschwenkt werden, woraufhin die Eckspriegelgestängeteile und die Heckscheibengestängeteile aufgrund ihrer relativen Verschwenkbarkeit einer solchen Schwenkbewegung des Haltebügels folgen können.

Weitere vorteilhafte Ausgestaltungen der Erfindung ergeben sich aus weiteren Unteransprüchen, der Zeichnung und der nachfolgenden Beschreibung. In der Zeichnung zeigen:
- Fig. 1: ein erstes Ausführungsbeispiel eines Cabriolet-Fahrzeuges nach der Erfindung in einer schematischen perspektivischen Schrägansicht mit den aufgeschwenkten Teilen in der Wartungs- oder Montagestellung,
- Fig. 2: das Ausführungsbeispiel nach Fig. 1 in einer Seitenansicht,
- Fig. 3: eine zu Fig. 1 analoge Darstellung mit Darstellung der verschiedenen Schwenkstellungen von Haltebügel, Heckscheibe und Eckspriegel,
- Fig. 4: eine zu Fig. 3 analoge Darstellung in Seitenansicht der Teile,
- Fig. 5: in einer schematischen Seitenansicht ein alternatives Ausführungsbeispiel eines Cabriolet-Fahrzeuges nach der Erfindung mit längenveränderlichem Heckscheibengestängeteil in der geschlossenen Stellung des Daches und des Haltebügels,
- Fig. 6: eine schematische perspektivische Seitenansicht des Ausführungsbeispiels nach Fig. 5 in der Wartungs- und Montagestellung des Haltebügels der Heckscheibe und des Eckspriegels,
- Fig. 7: das Ausführungsbeispiel nach den Fig. 5 und 6 in einer perspektivischen Teilansicht schräg von hinten, und
- Fig. 8: eine zu Fig. 7 analoge Darstellung mit Darstellung des Haltebügels der Heckscheibe und des Eckspriegels einmal in der geschlossenen Stellung des Haltebügels und einmal in der Wartungs- und Montagestellung.
- Fig. 9: eine Darstellung eines alternativen Ausführungsbeispiels (ausschnittsweise) mit einem oberhalb eines Deckels gelegenen Haltebügels für das Dach;
- Fig. 10: eine zu Fig. 9 analoge Darstellung mit geöffnetem Haltebügel und geöffnetem Deckel;
- Fig. 11: eine zu Fig. 10 analoge Darstellung aus einem veränderten Blickwinkel, und
- Fig. 12: eine Seitenansicht des Ausführungsbeispiels nach den Fig. 9 bis 11 mit hochgeschwenktem Haltebügel und hochgeschwenktem Deckel.

In der Zeichnung sind grundsätzlich gleichwirkende Teile mit übereinstimmenden Bezugsziffern beziffert. Allgemein mit 1 ist ein Cabriolet-Fahrzeug beziffert mit einer Fahrzeugkarosserie 2, einem Heckbereich 3, angedeuteten Rädern 4 sowie einem allgemein mit 5 bezifferten Dach, das ein Verdeckgestell 6 sowie einen Haltebügel 7 aufweist. Das Cabriolet-Fahrzeug soll in dem dargestellten Ausführungsbeispiel mit einem Mittelmotor ausgerüstet sein. Über einen Deckel 8 ist der Haltebügel 7 abzudecken. Das als Softtop ausgebildete Dach ist mit einer starren Heckscheibe 10 ausgerüstet. Das Verdeckgestell hat einen vorderen Verdeckanbindungsbügel 11, seitliche Lenker 12, Querspriegel 13 sowie einen Eckspriegel 14. Der Verdeckanbindungsbügel 11 ist eine feste Dachspitze, die entweder vom Verdeckstoff übergriffen ist oder an deren hinterem Ende sich der Verdeckstoff anschließt.

Die Heckscheibe 10 ist über ein Verdeckgestängeteil 15 mit einer zentralen, das Cabriolet-Fahrzeug quer durchsetzenden Torsionswelle 16 verbunden. Diese Torsionswelle 16 ist bei 17 in einem Verdeckgestellhauptlager gelagert. Der Haltebügel 7 ist separat in der Karosserie bei 18 schwenkbeweglich gelagert. Die Heckscheibe 10 ist in die mit 19 skizzierte Dachbahn des Daches integriert.

Aufgrund der Heckscheibenverdeckgestängeteile 15 ist auch in der geschlossenen Position des Daches die Heckscheibe sicher gehaltert und abgestützt. Über die zentrale Torsionswelle 16 kann über einen manuellen oder motorischen Antrieb das Dach insgesamt in seine offene Position gebracht werden. Aufgrund dieses zentralen Antriebes sind nicht an beiden Seiten des Verdeckgestells angeordnete separate Antriebe notwendig. Zudem wird die Antriebskraft sicher zu beiden Seiten des Verdeckes überführt, was einen störungsfreien Öffnungs- und Schließbetrieb gewährleistet.

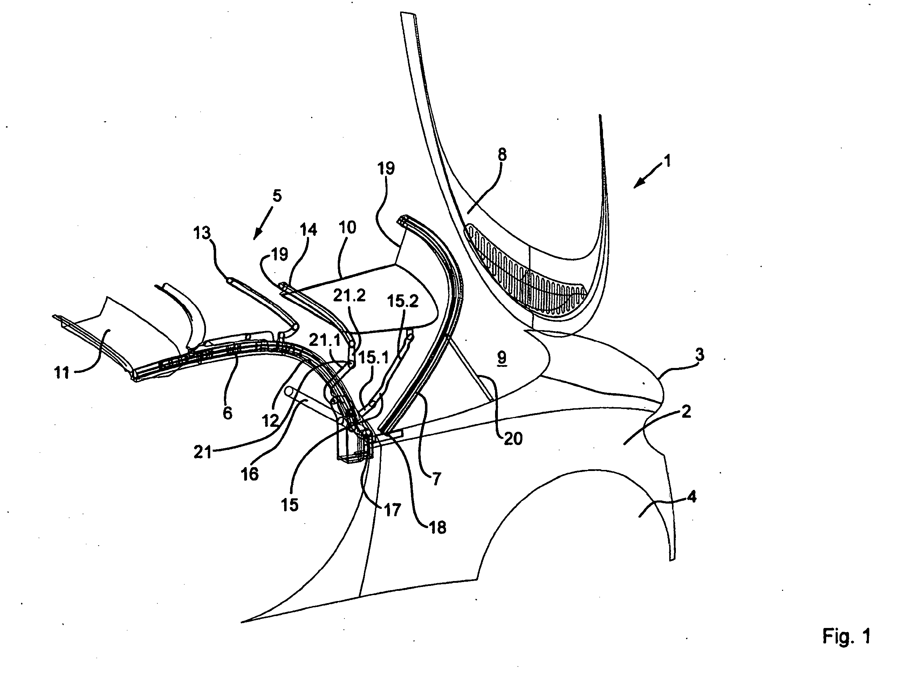

Um für Wartungs- und Montagezwecke bei ansonsten geschlossenem Dach den Motorraum erreichen zu können, soll der Montagebügel 7 in dem Ausführungsbeispiel nach den Fig. 1 bis 4 in die aus diesen Figuren jeweils skizzierte hochgestellte Wartungs- und Montagestellung hochgeschwenkt werden, in der der Haltebügel 7 durch eine Stange 20, die schwenkbeweglich an der Karosserie festgelegt ist, gehalten sein.

Um dies zu gewährleisten, ist auch die Heckscheibe 10 mit ihren Heckscheibengestängeteilen 15 mit zu verschwenken. Um dies für eine hinreichend große Montage- und Wartungsöffnung gewährleisten zu können, sind die Heckscheibengestängeteile zunächst jeweils zweiteilig ausgebildet und bestehen aus einem ersten Heckscheibengestängehebel 15.1, der einen drehfest mit der Torsionswelle ausgebildeten Fortsatz der Torsionswelle 16 bildet, und einem zweiten Heckscheibengestängehebel 15.2, der mit dem ersten Heckscheibengestängehebel 15.1 und der Heckscheibe 10 schwenkbar verbunden ist.

Der Eckspriegel 14 ist jeweils zu beiden Seiten über jeweils ein Heckscheibengestängeteil 15 mit der Torsionswelle 16 verbunden. Auch dieses jeweilige Eckspriegelgestängeteil 21 ist ebenfalls zweiteilig ausgebildet und besteht aus einem dem Eckspriegel zugewandten oberen Heckspriegelgestängehebel 21.2 und einem unteren Eckspriegelgestängehebel 21.1. Auch diese sind wiederum schwenkbeweglich aneinander festgelegt, so dass der Eckspriegel 14 durch ein Verschwenken des Eckspriegelgestängehebels 21.2 relativ zum Eckspriegelgestängehebel 21.1 in eine relative Schwenkstellung gebracht werden kann, also in der zeichnerischen Darstellung nach Fig. 1 in eine in der Zeichnung links verrückte vordere Position, bei ansonsten unverändert geschlossenem Dach. Aufgrund dieser Ausbildung der Verdeckgestängeteile ist gewährleistet, dass diese Wartungs- und Montagestellung bei diesem Cabriolet-Fahrzeug eingenommen werden kann, und zwar ungehindert durch die vorgesehenen Heckscheibengestängeteile 15.

Der Haltebügel 7 ist in Situationen, in denen ein Zugang zum darunterliegenden Motorbereich nicht erforderlich ist, also im normalen Fahrbetrieb und auch während des Verdecköffnens und des Verdeckschließens, in seiner unteren Lage arretiert. Für den Vorgang des Verdecköffnens und des Verdeckschließens verbleibt sowohl der Haltebügel 7 als auch der Deckel 8 in unveränderter Lage.

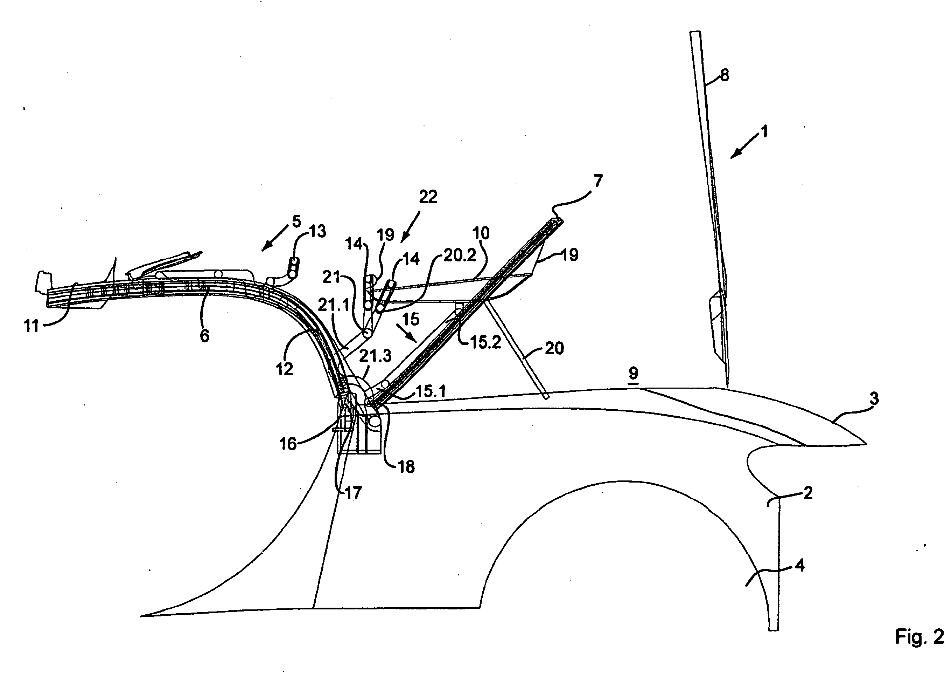

Die Darstellung nach Fig. 2 veranschaulicht noch näher die Ausbildung der Verdeckgestängeteile und zeigt, dass über einen Verbindungshebel 21.3 der Eckspriegelhebel 21.1 mit der Torsionswelle 16 verbunden ist. Durch den Pfeil 22 angedeutet, sind die beiden Stellungen des Eckspriegels 14 einmal in der geschlossenen Stellung des Haltebügels und einmal in der in Fig. 2 ersichtlichen Montagestellung des Haltebügels 7.

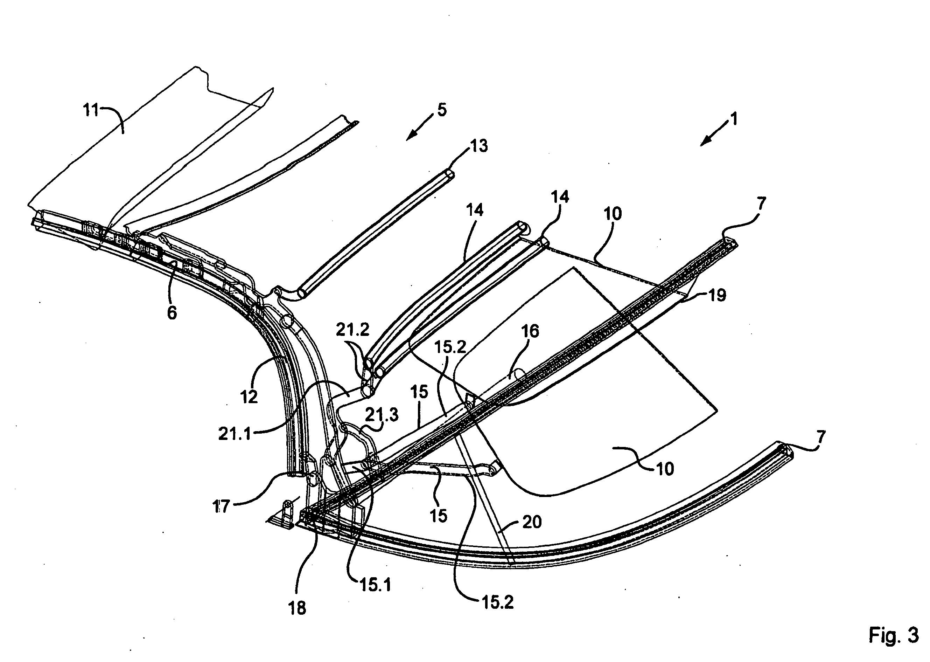

In Fig. 3 sind der Haltebügel 7 einmal in der hochgestellten Position und einmal in der Spannposition dargestellt. Dazu sind auch die Lagen der Heckscheibengestängeteile 15 und der Heckscheibe 10 für beide Positionen mit eingezeichnet. Gleiches gilt für die verschiedenen Positionen der Eckspriegel 14 und des zugehörigen Eckspriegelgestängehebels 21.2.

Es ist ersichtlich, dass der Eckspriegelgestängehebel 21.1, der an der Torsionswelle 16 angreift, sich in unveränderte Lage befindet. Gleiches gilt auch für den Verbindungshebel 21.3. Gleichwohl ist ein hinreichender Raum geschaffen, um für Montage- und/oder Wartungsarbeiten den Raum zugänglich gemacht zu haben. Auch der untere Heckscheibengestängehebel 15.1 ist, wie aus Fig. 3 ersichtlich ist, nicht mit verschwenkt worden. Dies macht nur der Verdeckgestängehebel 15.2 mit.

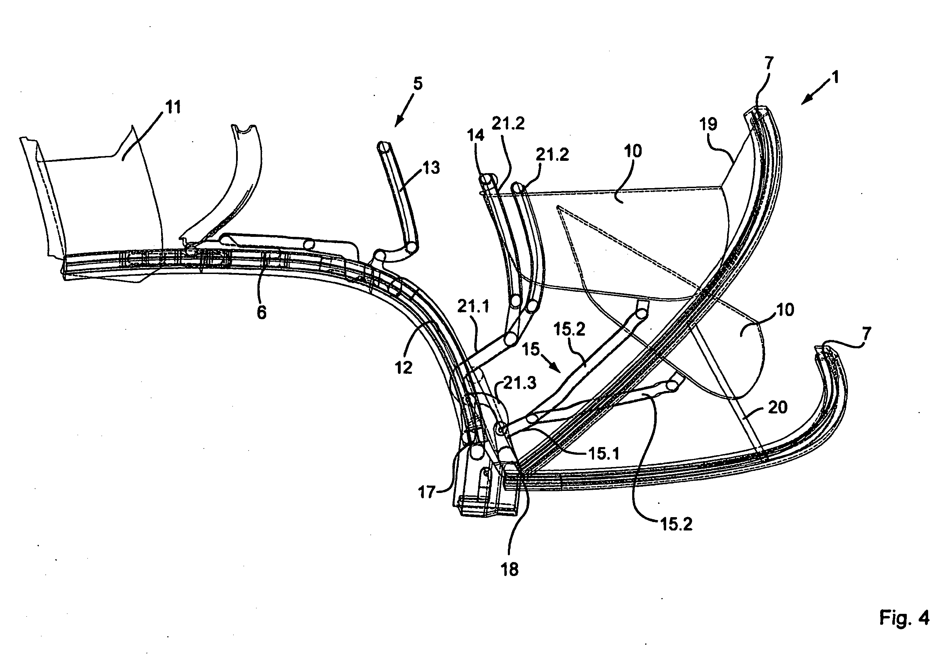

In der zu Fig. 3 analogen Darstellung nach Fig. 4, jedoch in Seitenansicht der Teile, ist dies in analoger Weise noch einmal dargestellt worden, wobei auch wiederum die jeweiligen unterschiedlichen Stellungen des Haltebügels 7, der Heckscheibe 10 und des Heckscheibengestängehebels 15.2 sowie des Eckspriegelgestängehebels 21.2 dargestellt sind.

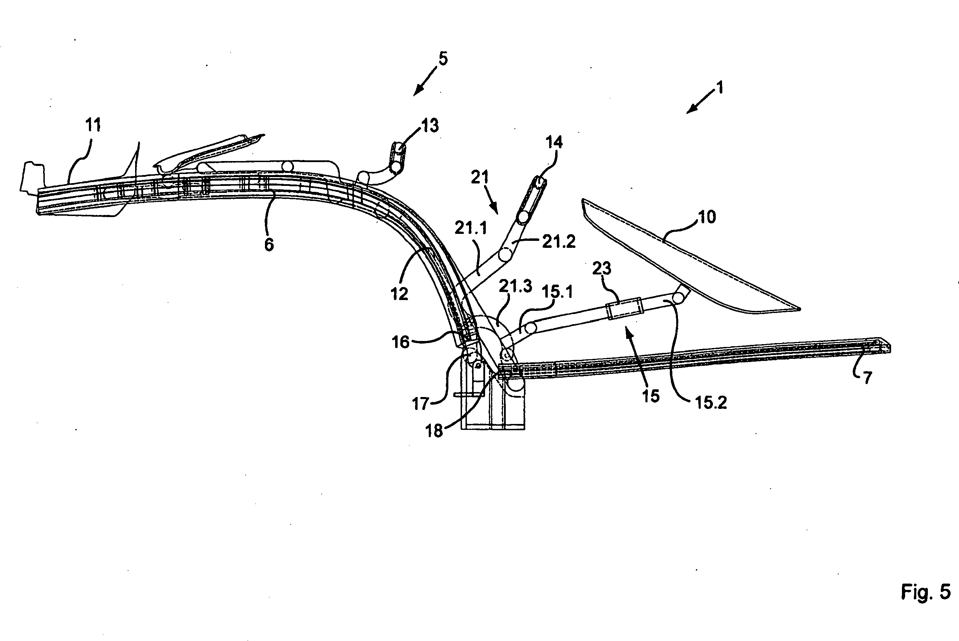

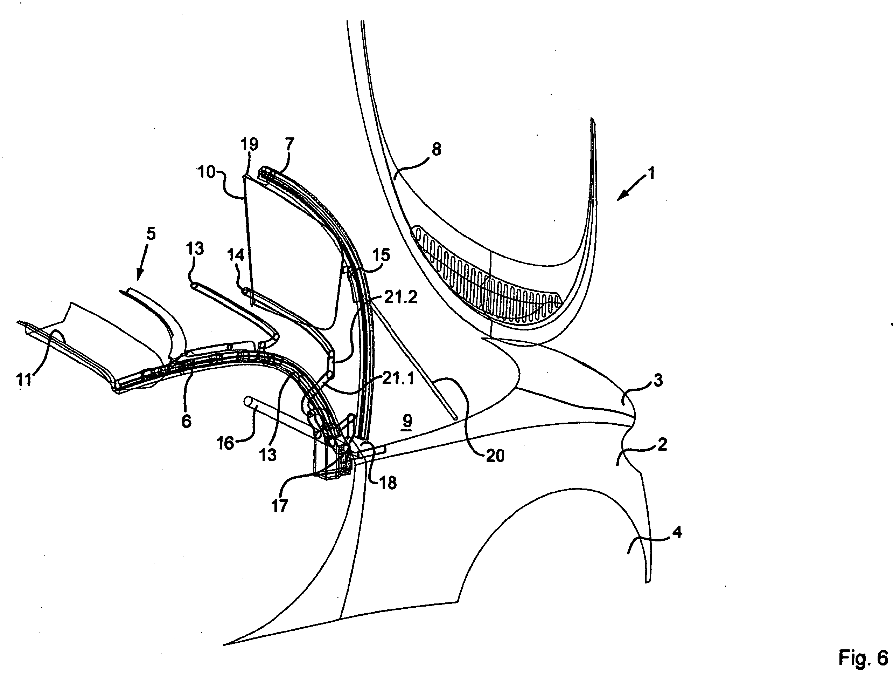

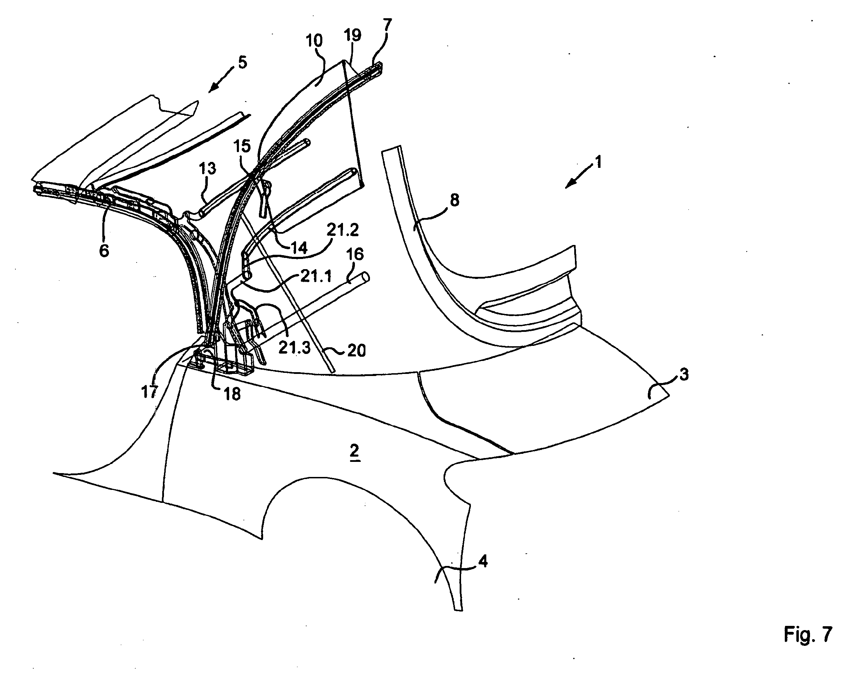

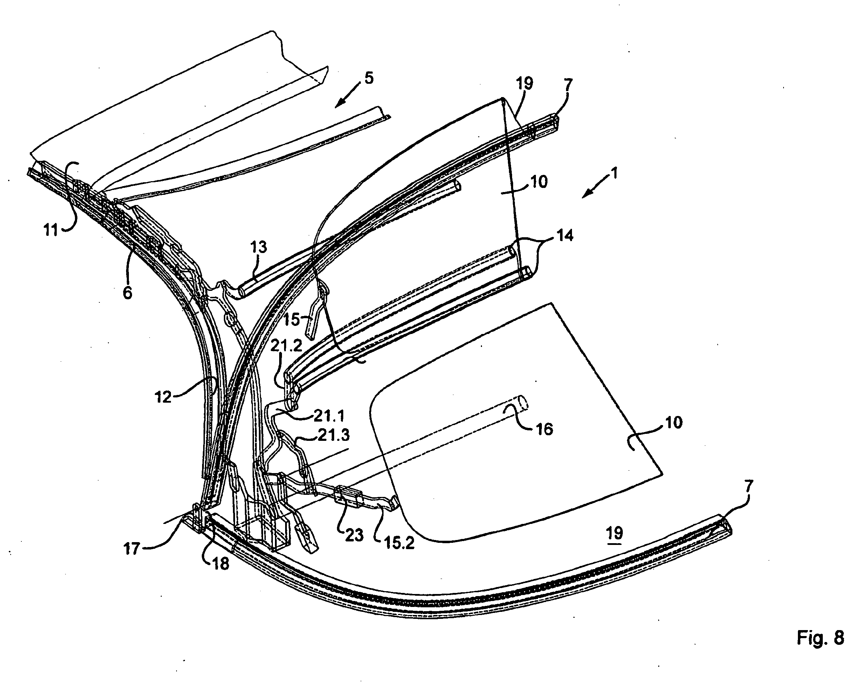

Bei ansonsten völlig analogem Aufbau ist in den Fig. 5 bis 8 ein zu dem Ausführungsbeispiel nach den Fig. 1 bis 4 ein alternatives Ausführungsbeispiel gezeigt, das bei ansonsten unveränderter Gestaltung des Cabriolet-Fahrzeuges sich insbesondere dadurch unterscheidet, dass hier ein Schieber 23 zur Längenveränderung des Heckscheibengestängeteils 15, nämlich zu Längenveränderung des Heckscheibengestängehebels 15.2 vorgesehen ist. Es ist ebenfalls möglich, den Heckscheibengestängehebel 15.2 teleskopartig aufzubauen, wobei der Schieber zum Verriegeln und Entriegeln genutzt werden kann. Ebenfalls ist es möglich, den Verdeckgestängehebel 15.2 zu unterteilen und trennbar auszubilden, wobei zur Einleitung eines Anhebens eines Haltebügels dieser z.B. zunächst zu entriegeln ist und danach ein Schieber oder sonstiger Feststeller zum Lösen der Verbindung innerhalb des Verdeckgestängehebels aktiviert wird. Vorteil einer derartigen Längenveränderung des Heckscheibenverdeckgestängehebels 15.2 ist, eine wesentlich vergrößerte Montageöffnung zur Verfügung zu stellen, wie dies besonders deutlich aus den Fig. 6 bis 8 zu ersehen ist. Hier ist der Haltebügel in eine nahezu aufrechte Wartungs- und Montageposition zu überführen und über die Sperrstange 20 zu arretieren. Diese Stellung kann selbst dann eingenommen werden, wenn an dieser Stelle im rückwärtigen Bereich des Fahrgastraumes ein üblicher Überrollbügel vorgesehen ist, da durch diese Ausbildung die Heckscheibe 10 in eine als vertikal ausgerichtete Überkopfstellung zu überführen ist. Ansonsten sind auch bei diesem Ausführungsbeispiel die Teile so ausgebildet, wie schon im Zusammenhang mit der Darstellung des Ausführungsbeispiels nach den Fig. 1 bis 4 erläutert.

In den Ausführungsbeispielen nach den Fig. 1 bis 8 ist der Haltebügel 7 unterhalb des Deckels 8 in der Schließstellung der Teile gelegen. Zu Wartungs- und Montagezwecken wird der Deckel 8 zunächst in seine hochgeschwenkte Position überführt, wie diese in Fig. 1 veranschaulicht ist. Der Bügel 7 ist gegensinnig schwenkbar gehaltert und kann in die hochgeschwenkte Position gebracht werden, wie diese ebenfalls in Fig. 1 veranschaulicht ist.

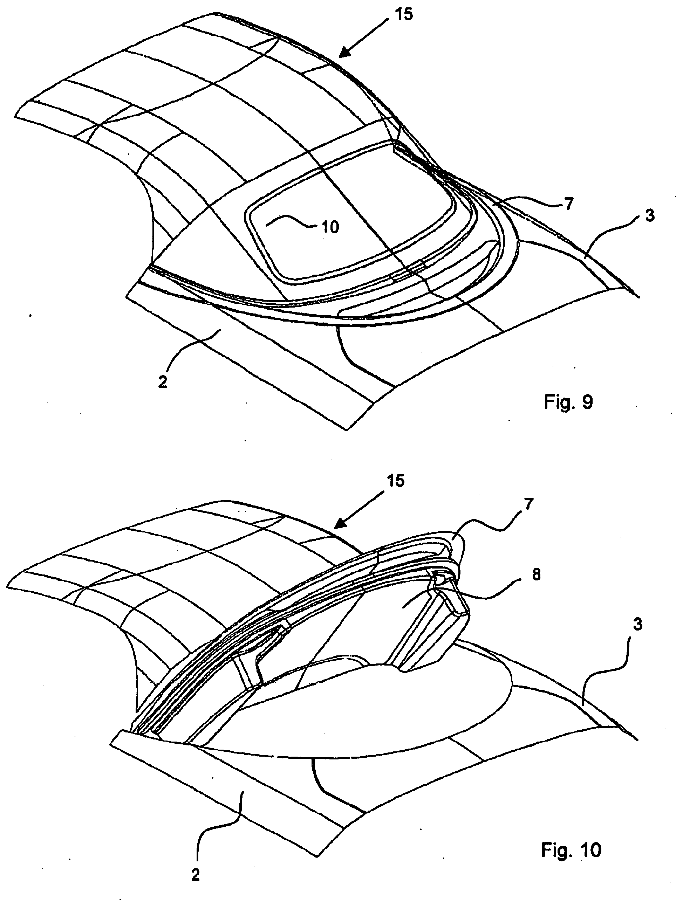

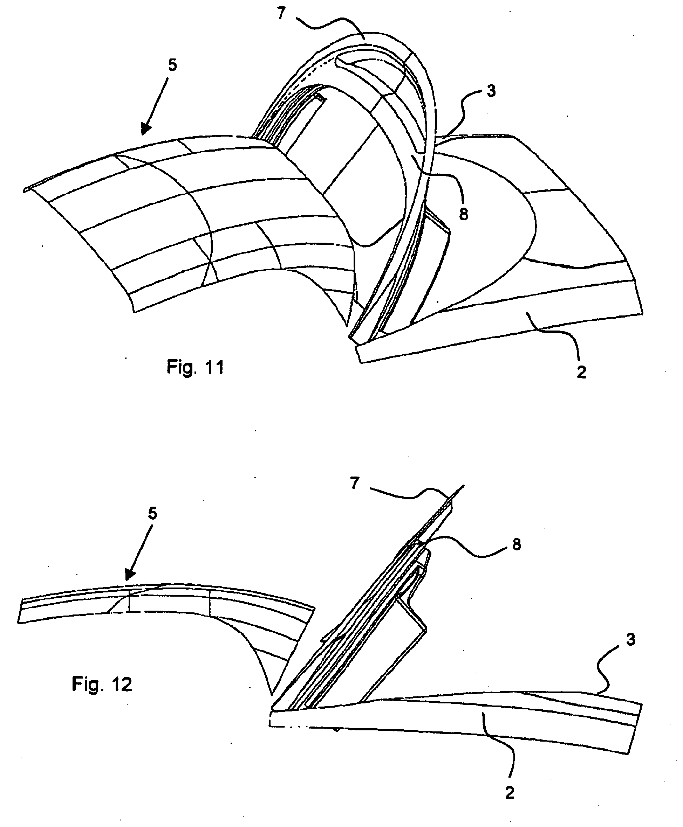

In den Fig. 9 bis 12 ist ein alternatives Ausführungsbeispiel dazu veranschaulicht, das darüber hinaus hinsichtlich der grundsätzlichen Anbindungs- und Schwenkkonstruktion von Verdeckteilen und der starren Heckscheibe so aufgebaut ist, wie dieses in den Ausführungsbeispielen nach den Fig. 1 bis 8 veranschaulicht ist. In diesem Ausführungsbeispiel ist der Haltebügel oberhalb des Deckels 8 gelegen, und wird aus der Schließstellung der Teile (Fig. 9) gemeinsam mit dem Haltebügel 7 in die in den Fig. 10, 11 und 12 gezeigte hochgeschwenkte Wartungs- und Montageposition überführt. Dazu sind sowohl Haltebügel 7 als auch Deckel 8 gleichsinnig schwenkbar gehaltert. Dabei kann eine Verdeckwanne zur Aufnahme des Verdeckes der Offenstellung des Daches ebenfalls mit hochgeschwenkt werden. In besonders vorteilhafter Weise können die Teile gemeinsam über nur zwei seitliche Schlösser mit der Karosserie verriegelt werden. Solche Schlösser können sich beispielsweise seitlich hinten über den üblichen Federbeindomen der Fahrzeugkarosserie befinden. Zur Abdichtung des Systems ist nur eine Dichtung erforderlich.

## Patentansprüche

1. Cabriolet-Fahrzeug (1) mit einem in seiner Schließstellung einen Fahrgastraum überspannenden und aus der Schließstellung in eine in einem rückwärtigen Fahrzeugbereich gelegene Ablagestellung überführbaren, eine starre Heckscheibe (10) aufweisenden Dach (5), das an einem Eck- (14) und Querspriegel (13) sowie an einem zumindest ein Antriebselement (16) zur Bewegung des Daches (5) aus seiner Schließstellung in die Ablagestellung und zurück umfassenden Verdeckgestell (6) festgelegt ist und wobei das Dach (5) am rückwärtigen Ende an einem bei einem Vorgang des Verdecköffnens und des Verdeckschließens in einer unteren Lage verbleibenden Haltebügel (7) festgelegt ist,
**dadurch gekennzeichnet,**
**dass** die Heckscheibe (10) über Heckscheibengestängeteile (15) und der Eckspriegel (14) über Eckspriegelgestängeteile (21) mit dem Antriebselement (16) verbunden sind, wobei sowohl die Heckscheibe (10) mit den Heckscheibengestängeteilen (15) als auch der Eckspriegel (14) über die Eckspriegelgestängeteile (21) relativ zu dem in einer Ruhestellung befindlichen Antriebselement (16) verschwenkbar und mit dem Haltebügel (7) in eine hochgeschwenkte Montage- oder Wartungsstellung überführbar sind.

2. Cabriolet-Fahrzeug nach Anspruch 1,
**dadurch gekennzeichnet,**
**dass** das Antriebselement (16) eine zentral das Fahrzeug (1) quer durchsetzenden Torsionswelle aufweist und die Heckscheibengestängeteile (15) und die Eckspriegelgestängeteile (21) relativ zu der Torsionswelle verschwenkbar sind.

3. Cabriolet-Fahrzeug nach Anspruch 1 oder 2,
**dadurch gekennzeichnet,**
**dass** der Haltebügel (7) des Daches (5) und das Verdeckgestell (6) in separaten Lagerstellen (17,18) gelagert sind.

4. Cabriolet-Fahrzeug nach einem der Ansprüche 1 bis 3,
**dadurch gekennzeichnet,**
**dass** die Heckscheibe (10) und der Eckspriegel (14) über ihre jeweiligen Dachanbindungen (19) von dem Haltebügel (7) in ihre Montage- oder Wartungsstellung überführbar sind.

5. Cabriolet-Fahrzeug nach einem der Ansprüche 1 bis 4,
**dadurch gekennzeichnet,**
**dass** der Haltebügel (7) in seiner Montage- oder Wartungsstellung über eine an der Karosserie (2) abstützbare Haltestange (20) arretierbar ist.

6. Cabriolet-Fahrzeug nach Anspruch 5,
**dadurch gekennzeichnet,**
**dass** die Haltestange (20) schwenkbar an der Karosserie festgelegt ist.

7. Cabriolet-Fahrzeug nach einem der Ansprüche 1 bis 6,
**dadurch gekennzeichnet,**
**dass** die Eckspriegelgestängeteile (21) als jeweils zweiteilige Eckspriegelgestängehebel (21.1, 21.2) ausgebildet sind, wobei der dem Dach (5) zugewandte Eckspriegelgestängeteilhebel (21.2) in der Schließstellung des Daches (5) relativ zu dem anderen (21.1) in Schließrichtung des Daches (5) verschwenkbar ist.

8. Cabriolet-Fahrzeug nach einem der Ansprüche 1 bis 7,
**dadurch gekennzeichnet,**
**dass** die Heckscheibengestängeteile (15) als jeweils zweiteilige Heckscheibengestängehebel (15.1, 15.2) ausgebildet sind, wobei der der Heckscheibe (10) zugewandte Heckscheibengestängehebel (15.2) in der Schließstellung des Daches (5) relativ zum anderen Heckscheibengestängehebel (15.1) in Schließrichtung des Daches (5) verschwenkbar ist.

9. Cabriolet-Fahrzeug nach Anspruch 8,
**dadurch gekennzeichnet,**
**dass** der der Heckscheibe (10) abgewandte Heckscheibengestängehebel (15.2) drehfest mit dem Antriebselement (16) verbindbar ist.

10. Cabriolet-Fahrzeug nach Anspruch 8 oder 9,
**dadurch gekennzeichnet,**
**dass** die Eckspriegelgestängehebel (21.1) an einem karosserieseitigen Lagerbock angelenkt sind und über einen Steuerhebel (20.3) mit dem Antriebelement (16) schwenkbar verbindbar sind.

11. Cäbriolet-Fährzeug nach einem der Ansprüche 1 bis 10,
**dadurch gekennzeichnet,**
**dass** die Heckscheibengestängeteile (15) längenveränderlich ausgebildet sind.

12. Cabriolet-Fahrzeug nach einem der Ansprüche 1 bis 10,
**dadurch gekennzeichnet,**
**dass** die Heckscheibengestängeteile (15) als lösbar miteinander verbundene Teile ausgebildet sind.

13. Cabriolet-Fahrzeug nach Anspruch 11,
**dadurch gekennzeichnet,**
**dass** die Heckscheibengestängeteile (15) zumindest bereichsweise teleskopartig ausgebildet sind.

14. Cabriolet-Fahrzeug nach einem der Ansprüche 1 bis 13,
**dadurch gekennzeichnet,**
**dass** der Haltebügel (7) in eine in etwa aufrechte Montage- oder Wartungsstellung überführbar ist, in der die Heckscheibe (10) in einer im wesentlichen aufrechte Über-Kopf-Stellung gelegen ist.

15. Cabriolet-Fahrzeug nach einem der Ansprüche 1 bis 14,
**dadurch gekennzeichnet,**
**dass** der Haltebügel (7) in Schließstellung der Teile unterhalb eines aufschwenkbaren Deckels (8) gelegen ist.

16. Cabriolet-Fahrzeug nach Anspruch 15,
**dadurch gekennzeichnet,**
**dass** der Deckel (8) gegenüber dem Haltebügel (7) gegensinnig verschwenkbar ausgebildet ist.

17. Cabriolet-Fahrzeug nach einem der Ansprüche 1 bis 14,
**dadurch gekennzeichnet,**
**dass** der Haltebügel (7) in der Schließstellung der Teile oberhalb eines aufschwenkbaren Deckels gelegen ist.

18. Cabriolet-Fahrzeug nach Anspruch 17,
**dadurch gekennzeichnet,**
**dass** der Haltebügel (7) und der Deckel (8) gleichsinnig verschwenkbar ausgebildet sind.

19. Cabriolet-Fahrzeug nach Anspruch 18,
**dadurch gekennzeichnet,**
**dass** der Haltebügel (7) mit dem Deckel (8) in eine hochgeschwenkte Lage überführbar ausgebildet ist.

## Claims

1. A convertible vehicle (1) comprising a roof (5) with a rigid rear window (10), which roof (5) spans a passenger compartment in its closed position and can be moved out of its closed position into a deposited position in a rearward vehicle portion, said roof (5) being fixed to a corner bow (14) and to a transverse bow (13) as well as to a hood frame (6) comprising at least one drive element (16) for moving the roof (5) from its closed position into its deposited position and vice versa, and said roof (5) being fixed to a retaining bow (7) at the rear end, said retaining bow (7) remaining in a lower position during a hood-opening and a hood-closing operation,
**characterised in that**
the rear window (10) is connected to the drive element (16) by rear window linkage members (15) and the corner bow (14) is connected to the drive element (16) by corner bow linkage members (21), and both, the rear window (10) with the rear window linkage members (15) and the corner bow (14), can be pivoted relative to the drive element (16) in its resting position via the corner bow linkage members (21) and can be transferred into an upwardly pivoted mounting or maintenance position by the retaining bow (7).

2. The convertible vehicle according to claim 1, **characterised in that** the drive element (16) comprises a torsional shaft which laterally crosses the vehicle (1) centrally and that the rear window linkage members (15) and the corner bow linkage members (21) can be pivoted relative to the torsional shaft.

3. The convertible vehicle according to claim 1 or 2, **characterised in that** the retaining bow (7) of the roof (5) and the hood frame (6) are supported in separate bearing positions (17, 18).

4. The convertible vehicle according to any one of claims 1 to 3, **characterised in that** the rear window (10) and the corner bow (14) can be transferred to their mounting or maintenance position via their respective roof connections (19) by the retaining bow (7).

5. The convertible vehicle according to any one of claims 1 to 4, **characterised in that** the retaining bow (7) can be locked in its mounting or maintenance position via a supporting bar (20) which is supportable on the vehicle body (2).

6. The convertible vehicle according to claim 5, **characterised in that** the supporting bar (20) is pivotably fixed to the vehicle body.

7. The convertible vehicle according to any one of claims 1 to 6, **characterised in that** the corner bow linkage members (21) are each formed as two-piece corner bow linkage levers (21.1, 21.2), the corner bow linkage lever (21.2) facing the roof (5) being pivotable in the closing direction of the roof (5) relative to the other corner bow linkage lever (21.1) when the roof (5) is in the closed position.

8. The convertible vehicle according to any one of claims 1 to 7, **characterised in that** the rear window linkage members (15) are each formed as two-piece rear window linkage levers (15.1, 15.2), the rear window linkage lever (15.2) facing the rear window (10) being pivotable in the closing direction of the roof (5) relative to the other rear window linkage lever (15.1) when the roof (5) is in the closed position.

9. The convertible vehicle according to claim 8, **characterised in that** the rear window linkage lever (15.2) facing away from the rear window (10) can be connected in a rotationally fixed manner to the drive element (16).

10. The convertible vehicle according to claim 8 or 9, **characterised in that** the corner bow linkage levers (21.1) are articulated to a vehicle body-side bearing mounting and can be pivotably connected to the drive element (16) via a control lever (20.3).

11. The convertible vehicle according to any one of claims 1 to 10, **characterised in that** the rear window linkage members (15) are formed such that their length can be changed.

12. The convertible vehicle according to any one of claims 1 to 10, **characterised in that** the rear window linkage members (15) are formed as parts which are releasably connected to each other.

13. The convertible vehicle according to claim 11, **characterised in that** the rear window linkage members (15) are at least partially formed telescopical.

14. The convertible vehicle according to any one of claims 1 to 13, **characterised in that** the retaining bow (7) can be transferred to an approximately upright mounting or maintenance position in which the rear window (10) is arranged in a substantially upright, overhead position.

15. The convertible vehicle according to any one of claims 1 to 14, **characterised in that** in the closed position of the parts, the retaining bow (7) is arranged below a cover (8) which can be opened by pivoting.

16. The convertible vehicle according to claim 15, **characterised in that** the cover (8) is provided to be pivotable in the opposite direction with respect to the retaining bow (7).

17. The convertible vehicle according to any one of claims 1 to 14, **characterised in that** in the closed position of the parts, the retaining bow (7) is arranged above a cover which can be opened by pivoting.

18. The convertible vehicle according to claim 17, **characterised in that** the retaining bow (7) and the cover (8) are provided to be pivotable in the same direction.

19. The convertible vehicle according to claim 18, **characterised in that** the retaining bow (7) is provided to be transferable into an upwardly pivoted position with the cover (8).

## Revendications

1. Véhicule cabriolet (1) avec un toit (5) couvrant un habitacle dans sa position de fermeture et déplaçable de la position de fermeture vers une position de rangement située à l'arrière du véhicule, ledit toit (5) comprenant une lunette arrière (10) rigide et étant fixé à un arceau angulaire (14) et à un arceau transversal (13) ainsi qu'à un bâti de capote (6) comprenant au moins un élément d'entraînement (16) pour le déplacement du toit (5) de sa position de fermeture vers sa position de rangement et inversement, et ledit toit (5) étant fixé à un étrier de retenue (7) à l'extrémité arrière, ledit étrier de retenue (7) restant dans une position inférieure lors d'une opération d'ouverture et de fermeture de la capote,
**caractérisé en ce que**
la lunette arrière (10) est reliée à l'élément d'entraînement (16) par l'intermédiaire de pièces de tringlerie de la lunette arrière (15) et l'arceau angulaire (14) est relié à l'élément d'entraînement (16) par l'intermédiaire de pièces de tringlerie d'arceau angulaire (21), aussi bien la lunette arrière (10) avec les pièces de tringlerie de la lunette arrière (15) que l'arceau angulaire (14) pouvant pivoter par l'intermédiaire des pièces de tringlerie d'arceau angulaire (21), par rapport à l'élément d'entraînement (16) qui se trouve dans une position de repos, et pouvant être déplacés par l'intermédiaire de l'étrier de retenue (7) vers une position de montage ou de maintenance pivotée vers le haut.

2. Véhicule cabriolet selon la revendication 1, **caractérisé en ce que** l'élément d'entraînement (16) comprend un axe de torsion traversant le véhicule (1) centralement en direction transversale et **en ce que** les pièces de tringlerie de la lunette arrière (15) et les pièces de tringlerie d'arceau angulaire (21) peuvent pivoter par rapport à l'axe de torsion.

3. Véhicule cabriolet selon la revendication 1 ou 2, **caractérisé en ce que** l'étrier de retenue (7) du toit (5) et le bâti de capote (6) sont logés dans des paliers séparés (17, 18).

4. Véhicule cabriolet selon l'une quelconque des revendications 1 à 3, **caractérisé en ce que** la lunette arrière (10) et l'arceau angulaire (14) peuvent être amenés vers leur position de montage ou de maintenance par l'intermédiaire de leurs fixations (19) respectives au toit par l'étrier de retenue (7).

5. Véhicule cabriolet selon l'une quelconque des revendications 1 à 4, **caractérisé en ce que** l'étrier de retenue (7) peut être arrêté dans sa position de montage ou de maintenance par l'intermédiaire d'une tige de retenue (20) s'appuyant sur la carrosserie (2).

6. Véhicule cabriolet selon la revendication 5, **caractérisé en ce que** la tige de retenue (20) est fixée à pivotement sur la carrosserie.

7. Véhicule cabriolet selon l'une quelconque des revendications 1 à 6, **caractérisé en ce que** les pièces de tringlerie d'arceau angulaire (21) sont chacune réalisée comme des leviers de tringlerie d'arceau angulaire (21.1, 21.2) en deux pièces, le levier de tringlerie d'arceau angulaire (21.2) tourné vers le toit pouvant pivoter dans la position de fermeture du toit (5) par rapport à l'autre levier de tringlerie d'arceau angulaire (21.1) dans la direction de fermeture du toit (5).

8. Véhicule cabriolet selon l'une quelconque des revendications 1 à 7, **caractérisé en ce que** les pièces de tringlerie de la lunette arrière (15) sont chacune réalisée comme des leviers de tringlerie de la lunette arrière (15.1, 15.2) en deux pièces, le levier de tringlerie de la lunette arrière (15.2) tourné vers la lunette arrière (10) pouvant pivoter dans la position de fermeture du toit (5) par rapport à l'autre levier de tringlerie de la lunette arrière (15.1) dans la direction de fermeture du toit (5).

9. Véhicule cabriolet selon la revendication 8, **caractérisé en ce que** le levier de tringlerie de la lunette arrière (15.2) opposé à la lunette arrière (10) peut être relié à rotation bloquée avec l'élément d'entraînement (16).

10. Véhicule cabriolet selon la revendication 8 ou 9, **caractérisé en ce que** les leviers de tringlerie d'arceau angulaire (21.1) sont articulés sur un support de palier côté carrosserie et peuvent être reliés à pivotement par l'intermédiaire d'un levier de commande (20.3) avec l'axe de torsion (16).

11. Véhicule cabriolet selon l'une quelconque des revendications 1 à 10, **caractérisé en ce que** les pièces de tringlerie de la lunette arrière (15) sont réalisées de manière à être variable en longueur.

12. Véhicule cabriolet selon l'une quelconque des revendications 1 à 10, **caractérisé en ce que** les pièces de tringlerie de la lunette arrière (15) sont réalisées comme des pièces reliées l'une à l'autre de manière amovible.

13. Véhicule cabriolet selon la revendication 11, **caractérisé en ce que** les pièces de tringlerie de la lunette arrière (15) sont de conception au moins partiellement télescopique.

14. Véhicule cabriolet selon l'une quelconque des revendications 1 à 13, **caractérisé en ce que** l'étrier de retenue (7) peut être amené vers une position de montage ou de maintenance quasi-verticale dans laquelle la lunette arrière (10) est située dans une position renversée essentiellement verticale.

15. Véhicule cabriolet selon l'une quelconque des revendications 1 à 14, **caractérisé en ce que**, dans la position de fermeture des éléments, l'étrier de retenue (7) est disposé sous un couvercle (8) que l'on peut ouvrir par pivotement.

16. Véhicule cabriolet selon la revendication 15, **caractérisé en ce que** le couvercle (8) est réalisé à pivotement en sens opposé par rapport à l'étrier de retenue (7).

17. Véhicule cabriolet selon l'une quelconque des revendications 1 à 14, **caractérisé en ce que**, dans la position de fermeture des éléments, l'étrier de retenue (7) est disposé au-dessus d'un couvercle que l'on peut ouvrir par pivotement.

18. Véhicule cabriolet selon la revendication 17, **caractérisé en ce que** l'étrier de retenue (7) et le couvercle (8) sont réalisés à pivotement dans le même sens.

19. Véhicule cabriolet selon la revendication 18, **caractérisé en ce que** l'étrier de retenue (7) est réalisé de manière à pouvoir être amené, avec le couvercle (8), vers une position pivotée vers le haut.
